# EUROPEAN PATENT SPECIFICATION

(11) **EP 2 181 877 B1**
(45) Date of publication and mention of the grant of the patent: **19.12.2012**
(21) Application number: 08168033.2
(22) Date of filing: 31.10.2008
(51) Int. Cl.: B60K 28/16, B60T 8/176, B66F 9/24

(54) **Industrial truck comprising a system for detecting spinning or locking of the drive wheel**
Flurförderzeug mit einem System zur Erfassung des Durchdrehens oder Blockierens des Antriebsrads
Chariot de manutention comprenant un système pour détecter le patinage ou le blocage de la roue motrice

(43) Date of publication of application: 05.05.2010
(73) Proprietor: BT Products AB, 595 81 Mjölby (SE)
(72) Inventor: Arnsby, Mattias, 582 17, Linköping (SE)
(74) Representative: Rasch, Teija Kaarina

(56) References cited:
- EP-A- 1 464 532
- EP-A- 1 666 301
- EP-A- 1 764 254
- JP-A- 2002 020 097

## Description

### TECHNICAL FIELD

The present invention relates to an industrial truck comprising a detection system for detecting spinning and/or locking of the drive wheel of the truck. The invention also relates to a method for detecting spinning and/or locking of the drive wheel of the truck and to a computer program product adopted to perform the method.

### BACKGROUND ART

Industrial trucks are commonly used in the handling of goods, for example in warehouses and magazines. Various types of trucks exist. A typical truck comprises a frame on which is arranged a propulsion system i.e. a motor, one or more drive wheels and load engagement means, such as forks. The truck can further comprise additional equipment, for example a driver's seat or platform, a mast, support legs and support wheels. The truck propulsion system could be based on electric power and include a direct current (DC) electric motor, an alternating current (AC) electric motor or an electric comutive (EC) electric motor, also know as brush less DC motor. Trucks with electric motors are often used indoors on even surfaces.

One problem related to industrial trucks is that the drive wheel may spin during acceleration of the truck. Spinning of the drive wheel occurs when the torque applied to the drive wheel by the motor exceeds the traction of the drive wheel, thus the maximum force the wheel can apply against the ground.

Another problem related to industrial trucks is that the drive wheel may lock during braking of the truck. Locking of the drive wheel occurs when the braking force applied to the drive wheel exceeds the traction of the drive wheel.

Spinning or locking of the drive wheel causes excessive wear of the drive wheel and could also cause poor manoeuvrability of the truck. Spinning and locking of the drive wheel also slows down the goods handling process in the warehouse.

In previous attempts to solve the above mentioned problem, systems for detecting spinning and locking of the drive wheel have been used. These systems are based on physical sensors, for example as described in EP1764254 A1. According to the prior art, spinning or locking of the drive wheel can be detected by comparing the speed of revolving parts of the truck. Measures for stopping the spinning or heaving the lock of the drive wheel can then be taken. However, systems of this type are associated with several drawbacks. The use of extra physical sensors which have to be installed in the truck increases the production costs of the truck. The sensors, which are in contact with revolving parts, also wear out fast which makes the signal less accurate.

EP1464532 A1 shows an industrial truck comprising components according to the preamble of claim 1.

It is an object of the present invention to provide an industrial truck with improved detection of spinning and locking of the drive wheel.

### SUMMARY OF THE INVENTION

The aforementioned object is achieved by an industrial fork lift truck comprising an electric motor, a motor controller for controlling the electric motor and a truck computer for controlling the motor controller, said truck computer comprising a detection system for detecting spinning and/or locking of the drive wheel of the truck, wherein the detection system is arranged to receive a signal corresponding to the momentary torque current of the motor, characterized in that said detection system further comprises:
- a calculation unit for calculating the theoretical torque current of the motor;
- a comparison unit for comparing the theoretical torque current of the motor and the momentary torque current of the motor,
   wherein the truck computer is arranged to reduce the acceleration or the deceleration of the truck if there is a difference between the theoretical current of the motor and the momentary current of the motor.

Through the detection system which detects the relationship between the theoretical torque current of the motor and the measured torque current of the motor it is achieved that spinning or locking of the drive wheel readily can be detected. This has the advantage that countermeasures, such as the calculation of a new acceleration or a new deceleration may be taken at an early stage. The detection system comprises no parts which are movable, or in contact with movable parts and therefore could wear out.

The detection system may, during acceleration of the truck be arranged to receive a signal corresponding to the momentary torque current of the motor.

The calculation unit may, during acceleration of the truck be arranged to calculate the theoretical torque current of the motor of the truck based on an acceleration velocity set point and the load on the truck and preset parameters.

The calculation unit may, during acceleration of the truck be arranged to calculate the theoretical torque current of the motor of the truck based on a velocity set point and an acceleration set point and the load on the truck and preset parameters.

A new acceleration may be calculated if the difference between the theoretical torque current of the motor and the momentary torque current of the motor is greater than zero or a preset value.

The industrial truck according to this preferred embodiment of the invention provides for a fast and reliable detection of spinning of the drive wheel of the truck. During acceleration of a truck the torque current of the electric motor of the truck is proportional to the torque which is produced by the motor to accelerate the drive wheel to a certain velocity as long as there is traction between the drive wheel and the ground. The traction depends on the weight on the wheel and the coefficient of friction between the wheel and the ground. If the amount of torque produced by the motor exceeds the traction the wheel will spin. If the wheel spins the torque drops and as a result thereof also the torque current of the motor will drop. A spinning drive wheel can therefore be detected by comparing the torque current of the motor of the truck under optimal driving conditions and no wheel spin, thus the theoretical torque current to the actual torque current of the motor of the truck during acceleration of the truck, thus the momentary torque current. If the theoretical torque current is greater than the momentary torque current the drive wheel is spinning. The industrial truck according to this preferred embodiment of the invention provides for a fast and reliable detection of spinning of the drive wheel of the truck.

According to one preferred embodiment of the industrial truck the detection system may, during deceleration of the truck be arranged to receive a signal corresponding to the momentary torque current of the motor.

The calculation unit may during deceleration of the truck be arranged to calculate the theoretical torque current of the motor during deceleration of the truck based on a deceleration velocity set point and the load on the truck and preset parameters.

The calculation unit may, during deceleration of the truck be arranged to calculate the theoretical torque current of the motor of the truck based on a velocity set point and an deceleration set point and the load on the truck and preset parameters.

The calculation unit may be arranged to calculate the theoretical torque current of the motor based on a second mechanical brake signal.

A new deceleration may be calculated if the difference between the theoretical torque current of the motor and the momentary torque current in the motor is greater than zero or a preset value.

The industrial truck according to this preferred embodiment of the invention provides for a fast and reliable detection of locking of the drive wheel of the truck. During deceleration of an industrial truck the torque current of the electric motor of the truck is proportional to the torque, which is produced by the motor to decelerate the drive wheel of the truck. If the amount of torque produced by the motor exceeds the traction the wheel will lock. The torque current of the motor then drops. Locking of the drive wheel can therefore be detected by comparing the torque current of the motor under optimal braking conditions and no wheel lock, thus the theoretical torque current to the torque current of the motor during braking of the truck, thus the momentary torque current. If the theoretical torque current is greater than the measured torque current the drive wheel is locked.

The detection system may be arranged to receive a signal corresponding to the momentary torque current from the motor controller of the truck.

The detection system may be arranged to receive a signal corresponding to the weight of the load that the truck is carrying from a load sensor arranged on the truck.

The invention also relates to a method for detecting spinning and/or locking of the drive wheel of an industrial truck according to invention, comprising the steps of:
- receiving a signal corresponding to the momentary torque current of the motor;
characterized by the steps of:
- calculating the theoretical torque current of the motor;
- comparing the theoretical torque current of the motor and the momentary torque current in the motor;
- reducing the acceleration or the deceleration of the truck if there is a difference between the theoretical torque current of the motor and the momentary torque current of the motor.

The invention also relates to a computer program product adapted to perform the method according to the invention.

### BRIEF DESCRIPTION OF THE DRAWINGS

- Figure 1: Shows schematically a part of the industrial truck of the invention according to a first, second and a third preferred embodiment.
- Figure 2a,b: Shows schematically different velocity curves during acceleration of the industrial truck according to the invention wherein a) shows a curve corresponding to a strong acceleration; b) shows a curve corresponding to a reduced acceleration.
- Figure 2c,d: Shows schematically different velocity curves during deceleration of the industrial truck according to the invention wherein c) shows a curve corresponding to a strong deceleration; d) shows a curve corresponding to a reduced deceleration.
- Figure 3a,b: Shows schematically how the torque current of the motor of the industrial truck of the invention varies over time during a) normal acceleration, thus without spinning of the drive wheel; b) acceleration with spinning of the drive wheel and countermeasures taken.
- Figure 4a,b: Shows schematically how the torque current of the motor of the industrial truck of the invention varies over time during a) normal deceleration, thus without locking of the drive wheel; b) deceleration with locking of the drive wheel and countermeasures taken.

### DETAILED DESCRIPTION OF EMBODIMENTS

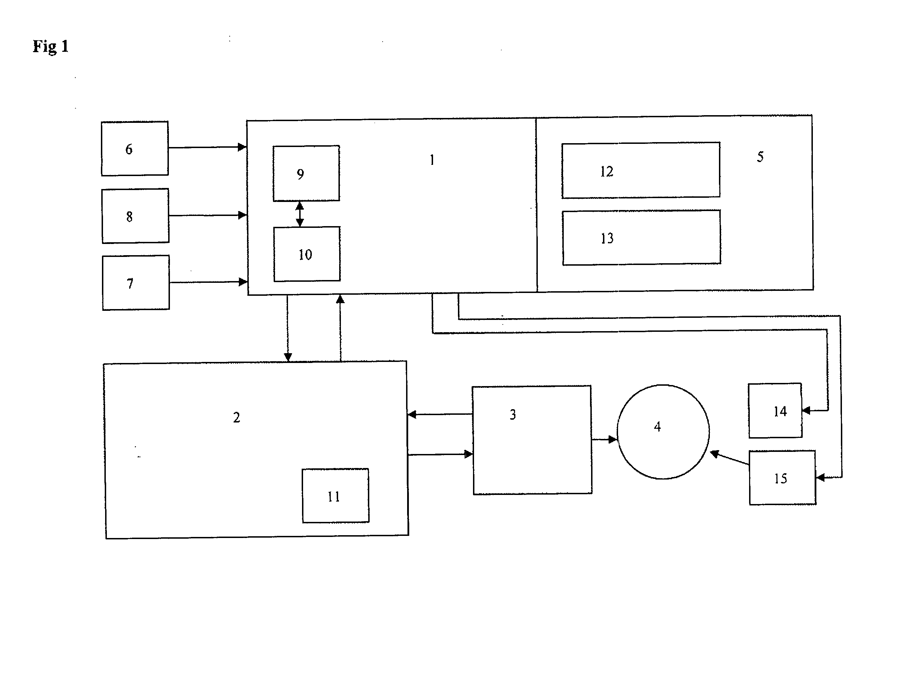

Figure 1 schematically describes a part of the industrial truck according to a first, preferred embodiment. The industrial truck may be any type of truck propelled by an electric motor for example, any type of electric ware house truck, a order picking truck, a truck with fix mast or a reach truck, having a horizontally movable mast. The truck could also be a smaller type of truck, such as a tiller arm truck where the operator walks behind the truck or stands on a foldable platform.

For clarity reasons only the parts relevant to the propulsion system of the truck are shown. Thus, figure 1 shows a truck comprising an electric motor 3, arranged to provide torque for a driving wheel 4. The motor 3 could be a dc-, ac- or ec-type of motor. A motor controller 2 is arranged to control the performance of the motor 3 and a truck computer 1 comprising a memory 9 and a micro processor 10 is arranged to control the motor controller 2. The truck computer also comprises a detection system 5 for detecting spinning and/or locking of the drive wheel 4.

An accelerator 6 such as a pedal or a handle is connected to the truck computer 1. The accelerator enables the driver to increase the velocity of the truck. The actuation of the accelerator 6, such as pressing of the pedal or turning of the handle generates a signal proportional to the actuation which is transmitted to the truck computer 1.

A brake actuator 8, such as a pedal or a handle is also connected to the truck computer 1. The brake actuator enables the driver to decrease the velocity of the truck. The actuation of the brake actuator 8, such as pressing the pedal or turning the handle generates a signal proportional to the actuation which is transmitted to the truck computer 1. The truck also comprises a first mechanical brake 14, arranged to brake the wheels on the forward support legs of the truck (not shown). The truck also comprises a second mechanical brake 15 arranged to brake the drive wheel 4 of the truck. The first and second mechanical brakes may for example be brake discs and brake pads acting directly on the support wheels and drive wheel, respectively. The second brake could also be a friction brake in the motor. Depending on the degree of actuation of the brake actuator 8 motor-braking and mechanical braking of the truck is performed. For example, only motor-braking of the truck is performed up to 50% of actuation of the brake actuator 8. If the actuator 8 is actuated further e.g up to 90% the first mechanical brake 14 is applied in addition to the motor-braking. If the actuator 8 is actuated over 90% the second mechanical brake 15 is applied in addition to the first mechanical brake 14 and the motor braking.

The amount of mechanical braking force that is applied in each case described above can vary from a few percent to one hundred percent. The amount of mechanical braking force that is applied is determined by the truck computer.

In some trucks, such as tiller arm trucks the accelerator and the brake actuator may be integrated into one control, such as a button or a lever. If the button is pressed in a forward direction the truck is accelerated. If the button is pressed in a backward direction the truck is braked.

The truck further comprises a load sensor 7, for example a pressure type sensor arranged on the lift cylinder of the truck. The load sensor 7, measures the weight that the truck is carrying on its forks and transmits this value to the truck computer 1.

Based on the signals from the accelerator 6 or the brake actuator 8 and the detection system 5, and set conditions and parameters the truck computer 1 is arranged to calculate the acceleration or the deceleration of the truck.

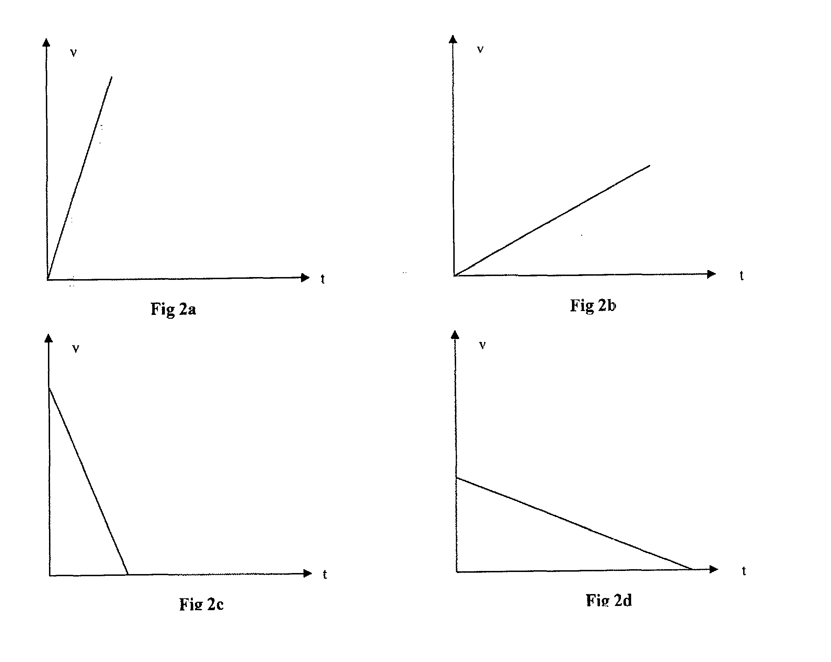

The acceleration is the velocity increase of the truck from a starting velocity to final velocity during a specific time period. Figure 2a and 2b describes some typical velocity curves where the velocity is indicated on the y-axis and the time on the x-axis. Figure 2a describes a velocity curve during a strong constant acceleration, and figure 2b during a weak constant acceleration. The deceleration is the velocity decrease from the present velocity to stand still, thus 0 m/s during a specific time period. Figure 2c and 2d describes some typical deceleration curves where the velocity is indicated on the y-axis and the time on the x-axis. Figure 2c describes a strong deceleration and figure 2d a weak deceleration.

According to one alternative, the acceleration is calculated by the truck computer 1 as a series of acceleration velocity set points. The deceleration of the truck is calculated by the truck computer 1 as a series of deceleration velocity set points. During acceleration or deceleration of the truck, the velocity set points are transmitted one at a time to the motor controller 2 of the truck. The velocity set points may be transmitted at any time interval, e.g. 5 - 100 ms. In the art, the transmitted velocity set point is normally referred to as a speed request.

According to a second alternative, the acceleration of the truck is calculated by the truck computer 1 as one velocity set point which is the final velocity of the truck and one acceleration set point which is the maximum acceleration rate of the truck. The deceleration of the truck is calculated by the truck computer 1 as one velocity set point which is the final velocity of the truck and one deceleration set point which is the maximum deceleration rate of the truck. During acceleration or deceleration of the truck, the velocity set point and the acceleration or the deceleration set point are transmitted one at a time to the motor controller 2 of the truck. The velocity set points may be transmitted at any time interval, e.g. 5 - 100 ms.

The motor controller 2 is a known part of the truck and controls in a known manner the motor 3 to accelerate or decelerate the truck. In the first case motor controller 2 controls the motor 3 to accelerate or decelerate the truck based on the velocity set points transmitted from the truck computer 1. In the second alternative described above, the motor controller 2 normally comprises a separate velocity set point calculation unit. This calculation unit calculates as series of distinct velocity set points for the acceleration or the deceleration of the truck based on the velocity set point and set point for acceleration/deceleration rate.

During acceleration or deceleration of the truck the torque current is constantly fed back from the motor 3 to the motor controller 2. During acceleration the torque current is proportional to the torque produced by the motor 3 to accelerate the drive wheel to the requested velocity. During deceleration the torque current is proportional to the torque produced by the motor 3 to decelerate the drive wheel to the requested velocity. The motor control unit 2 is further arranged to transmit signals corresponding to momentary torque current to the truck computer 1.

According to a first preferred embodiment of the industrial truck according to the invention the detection system 5 is arranged to detect if the drive wheel of the truck is spinning during acceleration of the truck.

The detection system 5 comprises a calculating unit 12, the calculating unit 12 is arranged to receive, for each velocity set point that is sent from the truck computer 1 to the motor controller 2, a signal corresponding to the same velocity set point in question from the truck computer 1. Alternatively, the calculating unit 12 is arranged to receive, for each velocity set point and acceleration rate set point that is sent from the truck computer 1 to the motor controller 2, a signal corresponding to the same velocity set point and the same acceleration rate set point in question from the truck computer 1 The calculating unit 12 is also arranged to receive a signal corresponding to the weight of the load that is carried by the truck. Based on these signals and preset parameters such as floor property and truck data the calculating unit 12 is arranged to calculate the theoretically torque current of the motor 3 during acceleration of the truck to the transmitted velocity set point.

The detection system 5 also comprises a comparison unit 13 which is arranged to receive a signal corresponding to the momentary torque current of the motor. The signal is transmitted from the motor controller 2 to the truck computer 1. The comparison unit 13 is further arranged to compare the theoretical torque current calculated by the calculating unit 12 and the momentary torque current of the motor 3, for example by subtracting the momentary torque current from the theoretical torque current. The detection system 5 is arranged to transmit a signal corresponding to the difference between the theoretical torque current and the measured torque current to the truck computer 1.

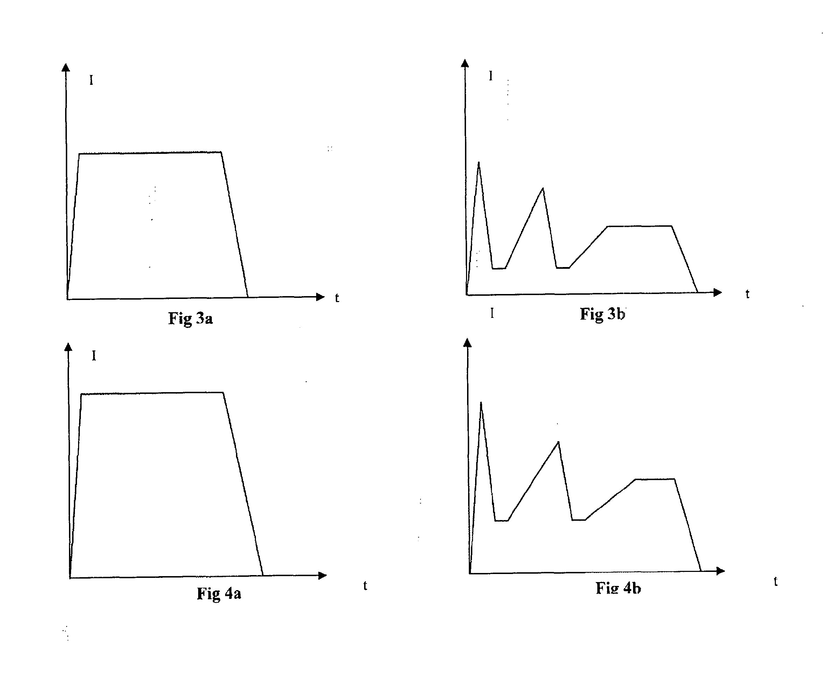

If the signal from the detection system 5 indicates that the difference between the theoretical and the measured torque current is zero or below a preset value this means that the drive wheel 4 is not spinning. The computer 1 then transmits the next velocity set point to the motor controller 2. Alternatively, the truck computer 1 continues to transmit the present velocity set point and acceleration set point to the motor controller 2. Consequently, the motor controller 2 maintains the present acceleration rate of the motor 3. Figure 3a describes how the torque current of the motor of the truck varies over time when the drive wheel is not spinning.

If the signal from the spin detection system 5 indicates that the difference between the theoretical torque current and the measured torque current of the motor 3 is greater than zero or a preset value this indicates that the drive wheel 4 is spinning.

The truck computer 1 is then arranged to transmit a signal to the motor controller 2 to reduce the velocity of the drive wheel 4. The velocity of the drive wheel 4 may be reduced by motor-braking and/or mechanical braking. The drive wheel 3 could be braked to a standstill, thus zero meter per second or to any other lower velocity e. g. the velocity the drive wheel 4 had prior to spinning.

The truck computer 1 is then further arranged to calculate a new acceleration for the truck. The new acceleration is weaker than the previous acceleration. For example could the first velocity set point in the new acceleration be set to the velocity the drive wheel 4 had prior to spinning. By weaker acceleration is meant that the time needed for the truck to accelerate from the starting velocity to the final velocity is longer than during the previous acceleration. The new acceleration is normally calculated by reducing the previous acceleration with a preset value in the truck computer 1. The preset value depends on factors such as, truck type, floor properties and driving conditions and is determined in advance by a skilled person. As described above, the new acceleration is calculated by the truck computer 1 as a series of velocity set points which then are transmitted one at a time as a speed request to the motor controller 2 which controls the motor 3 to accelerate the drive wheel 4. Alternatively, a set point corresponding to a lower acceleration rate is determined by the truck computer and transmitted to the motor controller 2. Figure 3b describes schematically how the torque current of the motor varies over time during spinning of the drive wheel.

The aforementioned procedure is then repeated until the truck is accelerated to the requested speed.

At the initiation of the acceleration the truck may be at a constant velocity, or at a standstill. It is also possible that the truck is already accelerating and that the driver attempts to increase the acceleration rate.

According to a second preferred embodiment of the industrial truck according to the invention the detection system 5 is arranged to detect locking of the drive wheel of the truck during deceleration of the truck. The drive wheel could be completely locked or partially locked. During partially locking of the drive wheel, the drive wheel is rolling with a velocity that is lower than the velocity at which the truck is moving.

The detection system 5 comprises a calculating unit 12. The calculating unit 12 is arranged to receive, for each velocity set point that is sent from the truck computer to the motor controller, a signal corresponding to the same velocity set point from the truck computer 1. Alternatively, the calculating unit 12 is arranged to receive, for each velocity set point and deceleration rate set point that is sent from the truck computer 1 to the motor controller 2, a signal corresponding to the same velocity set point and the same deceleration rate set point in question from the truck computer 1. The calculating unit 12 is also arranged to receive a signal corresponding to the weight of the load that is carried by the truck. The calculation unit 12 is further arranged to receive a first brake signal from the truck computer indicating if the first mechanical brake 14 is activated and arranged to receive a second brake signal from the truck computer 1 indicating if the second mechanical brake 15 is activated.

According to one alternative, the brake signals could on/off signals indicating if the brakes are applied or not. According to another alternative, the brake signals could be proportional to the amount of amount of mechanical braking force that is applied by the brakes. Based on these signals and preset parameters such as floor property and truck data the calculating unit 12 is arranged to calculate the theoretical torque current of the motor 3 during braking of the truck to the transmitted velocity set point.

The detection system 5 also comprises a comparison unit 13 which is arranged to receive a signal corresponding to the momentary torque current in the motor 3. The signal is transmitted from the motor controller 2 to the truck computer 1. The comparison unit 13 is further arranged to compare the theoretical torque current determined by the calculating unit 12 and the momentary torque current in the motor 3, for example by subtracting the momentary torque current generation from the theoretical torque current. The detection system 5 is arranged to transmit a signal corresponding to the difference between the theoretical torque current and the measured torque current to the truck computer 1.

If the signal from the detection system 5 indicates that the difference between the theoretical and the measured torque current is zero or below a preset value this means that the drive wheel 4 is not locked. The computer 1 then transmits the next velocity set point to the motor controller 2. Consequently, the motor controller 2 maintains the present deceleration rate of the motor 3. Alternatively, the truck computer continues to transmit the present velocity set point and deceleration rate set point. Figure 4a schematically describes how the torque current of the motor of the truck varies over time when the drive is not locked.

If the signal from the spin detection system 5 indicates that the difference between the theoretical torque current and the measured torque current in the motor 3 is greater than zero or any other preset value this indicates that the drive wheel 4 is locked or partially locked.

The truck computer 1 is arranged to first heave the locking of the drive wheel. To heave the locking of the drive wheel, the truck computer transmits a signal to the motor controller 2 to stop braking the motor 3. If the mechanical brakes are applied the truck computer may deactivate them so that the drive wheel 4 is rolling freely.

The truck computer 1 is further arranged to calculate a new deceleration for the truck. For example could the starting velocity of the new deceleration be set to the velocity of the freely rolling drive wheel. The new deceleration is normally weaker than the previous deceleration. By weaker deceleration is meant that the time needed for the truck to decelerate from the starting velocity to a velocity of zero meter per second is longer than during the previous deceleration. The new deceleration is normally calculated by reducing the previous deceleration with a preset value in the truck computer 1. The preset value depends on factors such as, truck type, floor properties and driving conditions and is determined in advance by a skilled person. As described above, the new deceleration is calculated by the truck computer 1 as a series of velocity set points which then are transmitted one at a time as a speed request to the motor controller 2 which controls the motor 3 to decelerate the drive wheel 4. Depending on the rate of the velocity reduction, the first and the second mechanical brakes may also be applied by the truck computer. Alternatively, a set point corresponding to a lower deceleration rate is determined by the truck computer and transmitted to the motor controller 2. Figures 4b schematically describes a how the torque current of the motor of the truck varies over time during deceleration of the truck with locking of the drive wheel.

The aforementioned procedure is then repeated until the velocity of the truck is reduced to the requested speed.

According to a third preferred embodiment of the industrial truck according to the invention the detection system 5 is arranged to detect if the drive wheel of the truck is spinning during acceleration of the truck and to detect if the drive wheel is locked during deceleration of the truck. According to this third preferred embodiment the detection system 5 is arranged to detect spinning of the drive wheel during acceleration of the truck as described in the first preferred embodiment of the industrial truck according to the invention. During deceleration of the truck the detection system 5 is arranged to detect locking of the drive wheel as described in the second preferred embodiment of the industrial truck according to the invention.

In the above described embodiments, the detection system 5 may be activated to detect spinning of the drive wheel by the initiation of the acceleration, such as the actuation of the accelerator. The detection unit may be activated to detect locking of the drive wheel by the initiation of the deceleration, such as actuation of the brake actuator.

In some cases, for example if the truck is driven on a surface with changing properties it is necessary to accept some spinning or locking of the drive wheel 4 otherwise the truck would continuously stop and restart. A limit corresponding to an acceptable difference between the theoretical and the momentary torque current could therefore be set in the truck computer 1. The limit is determined by a skilled person and could for example be 3% of the theoretical torque current. A difference between the theoretical and the momentary torque current below this value indicates that the drive wheel is not spinning respectively is not locked.

According to one alternative of the three preferred embodiments the detection system 5 and the parts thereof i.e. the calculating unit 12 and the comparison unit 13 may be realised as hardware modules in the truck computer 1, wherein the hardware modules are arranged such that signals can be sent from one module to another.

According to another alternative of the three preferred embodiments the detection system 5 and the parts thereof may also be realised as software, such as computer program modules or code means of a control program running on the processor 10 of truck computer 1. In this case, signals are virtually sent between the modules of the software.

In the three preferred embodiments the signals corresponding to the requested velocity, the weight of the load carried by the truck, brake signals and the measured momentary torque current in the motor 3 are simultaneous transmitted to the calculating unit 12 and the comparison unit 13 of the detection unit 5. The signals could be transmitted at any time interval, normally between 5 to 100 milliseconds.

A method for detecting spinning and or locking of the drive wheel of an industrial truck described above may comprise the following steps:
- receiving a signal corresponding to the momentary torque current of the motor (3);
- calculating the theoretical torque current of the motor (3);
- comparing the theoretical torque current of the motor (3) and the momentary torque current in the motor (3);
- reducing the acceleration or the deceleration of the truck if there is a difference between the theoretical torque current of the motor (3) and the momentary torque current of the motor (3).

A computer program product adapted to perform the method above may be stored in a part of the memory 9 of the truck computer. Said computer program product comprises code means adapted to perform the steps of the method described above when said program is run on the microprocessor 10 of the truck computer. When the microprocessor 10 performs a certain function it is to be understood that the microprocessor executes a certain part of the program which is stored in the memory 9.

## Claims

1. An industrial fork lift truck comprising an electric motor (3), a motor controller (2) for controlling the electric motor (3) and a truck computer (1) for controlling the motor controller (2), said truck computer (1) comprising a detection system (5) for detecting spinning and/or locking of the drive wheel of the truck wherein, the detection system (5) is arranged to receive a signal corresponding to the momentary torque current of the motor (3), **characterized in that** said detection system (5) further comprises:
- a calculation unit (12) for calculating the theoretical torque current of the motor (3);
- a comparison unit (13) for comparing the theoretical torque current of the motor (3) and the momentary torque current of the motor (3), wherein the truck computer is arranged to reduce the acceleration or the deceleration of the truck if there is a difference between the theoretical torque current of the motor (3) and the momentary torque current of the motor (3).

2. The industrial truck according to claim 1 wherein the detection system (5), during acceleration of the truck is arranged to receive a signal corresponding to the momentary torque current of the motor (3)

3. The industrial truck according to claim 2 wherein the calculation unit (12) during acceleration of the truck is arranged to calculate the theoretical torque current of the motor (3) of the truck based on an acceleration velocity set point and the load on the truck and preset parameters.

4. The industrial truck according to claim 2 wherein the calculation unit (12) during acceleration of the truck is arranged to calculate the theoretical torque current of the motor (3) of the truck based on a velocity set point and an acceleration set point and the load on the truck and preset parameters.

5. The industrial truck according to claims 2 - 4 wherein a new acceleration is calculated if the difference between the theoretical torque current of the motor (3) and the momentary torque current of the motor (3) is greater than zero or a preset value.

6. The industrial truck according to claim 1 wherein the detection system (5), during deceleration of the truck is arranged to receive a signal corresponding to the momentary torque current of the motor (3)

7. The industrial truck according to claim 6 wherein the calculation unit (12) is arranged to calculate the theoretical torque current of the motor (3) during deceleration of the truck based on a deceleration velocity set point and the load on the truck and preset parameters.

8. The industrial truck according to claim 7 wherein the calculation unit (12) is arranged to calculate the theoretical torque current of the motor (3) during deceleration of the truck based on a velocity set point and a deceleration set point and the load on the truck and preset parameters.

9. The industrial truck according to claim 1, 5-8 wherein the calculation unit (12) is arranged to calculate the theoretical torque current of the motor (3) based on a first mechanical brake signal.

10. The industrial truck according to claim 9 wherein the calculation unit (12) is arranged to calculate the theoretical torque current of the motor (3) based on a second mechanical brake signal.

11. The industrial truck according to any of claims 6 - 10 wherein a new deceleration is calculated if the difference between the theoretical torque current of the motor (3) and the momentary torque current of the motor (3) is greater than zero or a preset value.

12. The industrial fork lift truck according to any of claims 1 - 11, wherein the detection system (5) is arranged to receive a signal corresponding to the momentary torque current from the motor controller (2) of the truck.

13. The industrial fork lift truck according to any of claims 1 - 12, wherein the detection system 5 is arranged to receive a signal corresponding to the weight of the load that the truck is carrying from a load sensor (7) arranged on the truck.

14. Method for detecting spinning and/or locking of the drive wheel of an industrial truck according to claims 1-13, comprising the step of:
- receiving a signal corresponding to the momentary torque current of the motor (3);
**characterized by** the steps of:
- calculating the theoretical torque current of the motor (3);
- comparing the theoretical torque current of the motor (3) and the momentary torque current in the motor (3);
- reducing the acceleration or the deceleration of the truck if there is a difference between the theoretical torque current of the motor (3) and the momentary torque current of the motor (3).

15. Computer program product adapted to perform the method according to claim 14.

## Patentansprüche

1. Industrieller Gabelstapler mit einem Elektromotor (3), einer Motorsteuerung (2) zum Steuern des Elektromotors (3) und einem Staplercomputer (1) zum Steuern der Motorsteuerung (2), wobei der Staplercomputer (1) ein Erfassungssystem (5) zum Erfassen eines Durchdrehens und/oder Blockierens des Antriebsrats des Staplers aufweist und das Erfassungssystem (5) eingerichtet ist, ein Signal zu empfangen, das dem derzeitigen Drehmomentstrom des Motors (3) entspricht, **dadurch gekennzeichnet, dass** das Erfassungssystem (5) des Weiteren aufweist:
eine Berechnungseinheit (12) zum Berechnen des theoretischen Drehmomentstroms des Motors (3);
eine Vergleichseinheit (13) zum Vergleichen des theoretischen Drehmomentstroms des Motors (3) und des aktuellen Drehmomentstroms des Motors (3), wobei der Staplercomputer eingerichtet ist, die Beschleunigung oder Verzögerung des Staplers zu reduzieren, wenn ein Unterschied zwischen dem theoretischen Drehmomentstrom des Motors (3) und dem derzeitigen Drehmomentstrom des Motors (3) vorliegt.

2. Industrieller Stapler nach Anspruch 1, bei dem das Erfassungssystem (5) während einer Beschleunigung des Staplers eingerichtet ist, ein Signal zu empfangen, das dem aktuellen Drehmomentstrom des Motors (3) entspricht.

3. Industrieller Stapler nach Anspruch 2, bei dem die Berechnungseinheit (12) während einer Beschleunigung des Staplers eingerichtet ist, den theoretischen Drehmomentstrom des Motors (3) von dem Stapler auf Grundlage eines Beschleunigungs-Geschwindigkeits-Sollwerts und der Last auf dem Stapler und voreingestellten Parametern zu berechnen.

4. Industrieller Stapler nach Anspruch 2, bei dem die Berechnungseinheit (12) während einer Beschleunigung des Staplers eingerichtet ist den theoretischen Drehmomentstrom des Motors (3) von dem Staplers auf Grundlage eines Geschwindigkeitssollwerts und eines Beschleunigungssollwerts und der Last auf dem Stapler und voreingestellten Parametern zu berechnen.

5. Industrieller Stapler nach einem der Ansprüche 2-4, bei dem eine neue Beschleunigung berechnet wird, wenn der Unterschied zwischen dem theoretischen Drehmomentstrom des Motors (3) und dem aktuellen Drehmomentstrom des Motors (3) größer als 0 oder ein voreingestellter Wert ist.

6. Industrieller Stapler nach Anspruch 1, bei dem das Erfassungssystem (5) während einer Verzögerung des Staplers eingerichtet ist, ein Signal zu empfangen, das dem aktuellen Drehmomentstrom des Motors (3) entspricht.

7. Industrieller Stapler nach Anspruch 6, bei dem die Berechnungseinheit (12) eingerichtet ist, den theoretischen Drehmomentstrom des Motors (3) während einer Verzögerung des Staplers auf Grundlage eines Verzögerungs-Geschwindigkeits-Sollwerts und der Last auf dem Stapler und voreingestellten Parametern zu berechnen.

8. Industrieller Stapler nach Anspruch 7, bei dem die Berechnungseinheit (12) eingerichtet ist, den theoretischen Drehmomentstrom des Motors (3) während einer Verzögerung des Staplers auf Grundlage eines Geschwindigkeitssollwerts und eines Verzögerungssollwerts und der Last auf dem Stapler und voreingestellten Parametern zu berechnen.

9. Industrieller Stapler nach einem der Ansprüche 1 und 5-8, bei dem die Berechnungseinheit (12) eingerichtet ist, den theoretischen Drehmomentstrom des Motors (3) auf Grundlage eines ersten mechanischen Bremssignals zu berechnen.

10. Industrieller Stapler nach Anspruch 9, bei dem die Berechnungseinheit (12) eingerichtet ist, den theoretischen Drehmomentstrom des Motors (3) auf Grundlage eines zweiten mechanischen Bremssignals zu berechnen.

11. Industrieller Stapler nach einem der Ansprüche 6-10 bei dem eine neue Verzögerung berechnet wird, wenn der Unterschied zwischen dem theoretischen Drehmomentstrom des Motors (3) und dem aktuellen Drehmomentstrom des Motors (3) größer als 0 oder ein voreingestellter Wert ist.

12. Industrieller Gabelstapler nach einem der Ansprüche 1-11, bei dem das Erfassungssystem (5) eingerichtet ist, ein Signal zu empfangen, das dem aktuellen Drehmomentstrom der Motorsteuerung (2) des Staplers entspricht.

13. Industrieller Gabelstapler nach einem der Ansprüche 1-12, bei dem das Erfassungssystem (5) eingerichtet ist, ein Signal von einem auf dem Stapler angeordneten Lastsensor (7) zu empfangen, das dem Gewicht der Last, die der Stapler trägt, entspricht.

14. Verfahren zum Erfassen eines Durchdrehens und/oder Blockierens des Antriebsrads eines Flurförderzeugs nach einem der Ansprüche 1 bis 13, mit den Schritten:
Empfangen eines Signals, das dem aktuellen Drehmomentstrom des Motors (3) entspricht;
**gekennzeichnet durch** die Schritte:
Berechnen des theoretischen Drehmomentstroms von dem Motor (3);
Vergleichen des theoretischen Drehmomentstroms von dem Motor (3) und des aktuellen Drehmomentstroms von dem Motor (3);
Vermindern der Beschleunigung oder der Verzögerung des Fahrzeugs, wenn ein Unterschied zwischen dem theoretischen Drehmomentstrom des Motors (3) und dem aktuellen Drehmomentstrom des Motors (3) vorliegt.

15. Computerprogramm, das eingerichtet ist, das Verfahren nach Anspruch 14 auszuführen.

## Revendications

1. Chariot de manutention élévateur à fourche comprenant un moteur électrique (3), un contrôleur de moteur (2) pour commander le moteur électrique (3) et un ordinateur de chariot (1) pour commander le contrôleur de moteur (2), ledit ordinateur de chariot (1) comprenant un système de détection (5) pour détecter la rotation et/ou le blocage de la roue motrice du chariot, dans lequel le système de détection (5) est agencé pour recevoir un signal correspondant au courant de couple instantané du moteur (3), **caractérisé en ce que** ledit système de détection (5) comprend en outre :
- une unité de calcul (12) pour calculer le courant de couple théorique du moteur (3) ;
- une unité de comparaison (13) pour comparer le courant de couple théorique du moteur (3) et le courant de couple instantané du moteur (3), dans lequel l'ordinateur de chariot est agencé pour réduire l'accélération ou la décélération du chariot s'il y a une différence entre le courant de couple théorique du moteur (3) et le courant de couple instantané du moteur (3).

2. Chariot de manutention selon la revendication 1, dans lequel le système de détection (5), au cours de l'accélération du chariot, est agencé pour recevoir un signal correspondant au courant de couple instantané du moteur (3).

3. Chariot de manutention selon la revendication 2, dans lequel l'unité de calcul (12), au cours de l'accélération du chariot, est agencée pour calculer le courant de couple théorique du moteur (3) du chariot sur la base d'un point de consigne de vitesse d'accélération et de la charge sur le chariot et de paramètres préréglés.

4. Chariot de manutention selon la revendication 2, dans lequel l'unité de calcul (12), au cours de l'accélération du chariot, est agencée pour calculer le courant de couple théorique du moteur (3) du chariot sur la base d'un point de consigne de vitesse et d'un point de consigne d'accélération et de la charge sur le chariot et de paramètres préréglés.

5. Chariot de manutention selon les revendications 2 à 4, dans lequel une nouvelle accélération est calculée si la différence entre le courant de couple théorique du moteur (3) et le courant de couple instantané du moteur (3) est supérieure à zéro ou à une valeur préréglée.

6. Chariot de manutention selon la revendication 1, dans lequel le système de détection (5), au cours de la décélération du chariot, est agencé pour recevoir un signal correspondant au courant de couple instantané du moteur (3).

7. Chariot de manutention selon la revendication 6, dans lequel l'unité de calcul (12) est agencée pour calculer le courant de couple théorique du moteur (3) au cours de la décélération du chariot sur la base d'un point de consigne de vitesse de décélération et de la charge sur le chariot et de paramètres préréglés.

8. Chariot de manutention selon la revendication 7, dans lequel l'unité de calcul (12) est agencée pour calculer le courant de couple théorique du moteur (3) au cours de la décélération du chariot sur la base d'un point de consigne de vitesse et d'un point de consigne de décélération et de la charge sur le chariot et de paramètres préréglés.

9. Chariot de manutention selon les revendications 1, 5 à 8, dans lequel l'unité de calcul (12) est agencée pour calculer le courant de couple théorique du moteur (3) sur la base d'un premier signal de freinage mécanique.

10. Chariot de manutention selon la revendication 9, dans lequel l'unité de calcul (12) est agencée pour calculer le courant de couple théorique du moteur (3) sur la base d'un second signal de freinage mécanique.

11. Chariot de manutention selon l'une quelconque des revendications 6 à 10, dans lequel une nouvelle décélération est calculée si la différence entre le courant de couple théorique du moteur (3) et le courant de couple instantané du moteur (3) est supérieure à zéro ou à une valeur préréglée.

12. Chariot de manutention élévateur à fourche selon l'une quelconque des revendications 1 à 11, dans lequel le système de détection (5) est agencé pour recevoir un signal correspondant au courant de couple instantané en provenance du contrôleur de moteur (2) du chariot.

13. Chariot de manutention élévateur à fourche selon l'une quelconque des revendications 1 à 12, dans lequel le système de détection 5 est agencé pour recevoir un signal correspondant au poids de la charge que le chariot transporte, en provenance d'un capteur de charge (7) agencé sur le chariot.

14. Procédé destiné à détecter la rotation et/ou le blocage de la roue motrice d'un chariot de manutention selon les revendications 1 à 13, comprenant l'étape consistant à :
- recevoir un signal correspondant au courant de couple instantané du moteur (3) ;
**caractérisé par** les étapes consistant à :
- calculer le courant de couple théorique du moteur (3) ;
- comparer le courant de couple théorique du moteur (3) et le courant de couple instantané dans le moteur (3) ;
- réduire l'accélération ou la décélération du chariot s'il y a une différence entre le courant de couple théorique du moteur (3) et le courant de couple instantané du moteur (3).

15. Produit programme informatique adapté pour exécuter le procédé selon la revendication 14.
